# EUROPÄISCHE PATENTSCHRIFT

(11) **EP 3 898 467 B1**
(45) Veröffentlichungstag und Bekanntmachung des Hinweises auf die Patenterteilung: **10.06.2026**
(21) Anmeldenummer: 19835645.3
(22) Anmeldetag: 19.12.2019
(51) Int. Cl.: B65G 13/06, B65G 23/08, B65G 43/00, H04L 12/40

(54) **FÖRDERANORDNUNG MIT SENSOREN MIT BUSDATENKODIERUNG**
CONVEYOR ARRANGEMENT WITH SENSORS WITH BUS DATA ENCODING
ENSEMBLE DE TRANSPORT COMPRENANT DES CAPTEURS AVEC CODAGE DE DONNÉES DE BUS

(30) Priorität: 21.12.2018 DE 102018133482
(43) Veröffentlichungstag der Anmeldung: 27.10.2021
(73) Patentinhaber: Interroll Holding AG, 6592 Sant' Antonino (CH)
(72) Erfinder: HEINEN, Daniel, 41836 Hückelhoven (DE); HENZE, Herbert, 41836 Hückelhoven (DE); BLÖDORN, Claus, 41836 Hückelhoven (DE); PUNTIGAM, Wolfgang, 41836 Hückelhoven (DE)
(74) Vertreter: Kohlhof, Stephan
(86) Internationale Anmeldenummer: PCT/EP2019/086247
(87) Internationale Veröffentlichungsnummer: WO 2020/127691

(56) Entgegenhaltungen:
- EP-A1- 2 221 695
- WO-A1-2012/175193
- DE-A1- 102005 046 763
- DE-A1- 102016 120 415
- ANONYMOUS: "Speicherprogrammierbare Steuerung - Wikipedia", 31 May 2017 (2017-05-31), XP055401504, Retrieved from the Internet <URL:https://de.wikipedia.org/w/index.php?title=Speicherprogrammierbare_Steuerung&oldid=165967031#SPS-Zust.C3.A4nde> [retrieved on 20170828]
- ANONYMOUS: "Feldbus - Wikipedia - Version vom 21.07.2018", 21 July 2018 (2018-07-21), XP055676138, Retrieved from the Internet <URL:https://de.wikipedia.org/w/index.php?title=Feldbus&oldid=179337515> [retrieved on 20200312]

## Beschreibung

Die Erfindung betrifft die Verwendung einer Förderanordnung.

Förderanordnungen werden dazu eingesetzt, um Fördergegenstände entlang einer Förderstrecke zu fördern. Dabei können Vorrichtungen zur Ausschleusung, Einschleusung, Anheben oder Absenken und zum Zwischenlagern der Gegenstände in die Förderanordnung integriert sein. In einer Förderanordnung sind eine oder mehrere motorbetriebene Förderrollen eingesetzt. Oftmals sind mehrere Förderanordnungen in einer Fördervorrichtung verbaut. Die Fördervorrichtung ist häufig aus mehreren Förderzonen aufgebaut, die von einem zu fördernden Gegenstand, dem Fördergut, nacheinander entlang einer Förderstrecke durchlaufen werden. Jede Förderzone weist hierbei zumindest eine motorbetriebene Förderrolle und in aller Regel weitere Förderrollen auf. Eine Förderanordnung kann eine solche Förderzone als Teil der Förderstrecke bilden. Durch diese Aufbauweise können in der Fördervorrichtung mehrere Gegenstände gleichzeitig gefördert werden und ein Kontakt zwischen einzelnen Fördergütern vermieden werden, indem die motorbetriebenen Förderrollen der einzelnen Förderzonen entsprechend angesteuert werden. Dies realisiert die sogenannte staudrucklose Förderung, die in vielen Anwendungen heute angestrebt wird, um eine hohe Sicherheit vor Beschädigungen des Förderguts bei hoher Förderdichte und -effizienz zu gewährleisten.

Es ist beispielsweise bekannt, eine motorbetriebene Förderrolle staudrucklos im Einzelplatzabzug anzusteuern. In diesem Betriebsmodus wird die Förderrolle nur zur Förderung eines Förderguts in ihrer Förderzone angesteuert, wenn die in Förderrichtung nachgelagerte, benachbarte Förderzone frei ist, also nicht mit einem weiteren Fördergut belegt ist. Eine andere staudrucklose Betriebsweise ist der sogenannte Blockabzugsmodus. Im Blockabzugsmodus werden alle motorbetriebenen Förderrollen entlang benachbarter Förderzonen gleichzeitig angesteuert, sodass auch bei benachbarten, mit Fördergütern besetzten Förderzonen eine Förderung ohne Kontakt möglich ist, da die Förderzone, in die ein Fördergut hineingefördert wird, gleichzeitig das Fördergut, das bisher in dieser Förderzone war, herausbefördert.

Mittels der staudrucklosen Förderung können Beschädigungen der Gegenstände zuverlässig vermieden werden, obwohl diese in kurz beabstandeter Folge in einer Reihe entlang der Förderstrecke befördert werden. Problematisch hierbei ist, dass sich sowohl Parameter, welche für die Förderung auf Seiten der Förderanordnung relevant sind, im Verlauf des Betriebs ändern können, als auch, dass auf Seiten des geförderten Gegenstands solche Einflussparameter variabel sind. So kann sich beispielsweise der Reibwert zwischen der Förderrolle und dem geförderten Gegenstand durch Verschleiß, Verschmutzung und unterschiedliche Materialbeschaffenheiten der Unterseite des Gegenstands ändern, was zu mehr oder weniger Schlupf führt. Um Beschädigungen der Gegenstände zu vermeiden, die gerade bei aneinander gestauten mehreren Gegenständen durch eine Einwirkung der addierten Förderkräfte auf den vordersten Gegenstand auftreten können, ist es daher bekannt, die Lage der vorderen und/oder hinteren Enden der geförderten Gegenstände zu überwachen.

Maßgeblich für diese Überwachung sind an geeigneter Stelle angeordnete Sensoren und es ist vorbekannt, eine motorbetriebene Förderrolle solcher Förderanordnungen in Abhängigkeit eines Sensorsignals eines oberhalb der Förderrolle angeordneten Sensors zu steuern. Üblicherweise werden dazu Lichtschranken entlang der Förderstrecke angeordnet, die seitlich an der Förderstrecke an einem Rahmen befestigt sind, in dem die Förderrollen drehbar gelagert sind. Dabei ist im Stand der Technik je Förderzone ein Sensor vorgesehen. In Abhängigkeit eines Sensorsignals eines solchen Sensors wird die motorbetriebene Förderrolle der Förderzone angesteuert. Das Sensorsignal bzw. dessen Wert hängt davon ab, ob und wann der Sensor ein Fördergut detektiert bzw. erfasst.

Um ein Sensorsignal eines solchen Sensors zur Steuerung einer motorbetriebenen Förderrolle zu nutzen, sind entsprechende kabelgebundene Datenübertragungen von dem Sensor an eine zentrale Steuerungseinheit und von der zentralen Steuerungseinheit zu der motorbetriebenen Förderrolle eingerichtet. Es ist ferner bekannt, das Sensorsignal des Sensors an eine dezentrale von mehreren Steuerungseinheiten zu übertragen, die entlang der Förderstrecke angeordnet sind und diese Steuerungseinheit wiederum mit der Antriebseinheit zu verbinden, um die Antriebseinheit anzusteuern. Diese entlang der Förderstrecke angeordneten dezentralen Steuerungssysteme sind miteinander zu Signalübertragung gekoppelt.

Nachteilig an diesem Stand der Technik ist zum einen der erhebliche Verkabelungsaufwand, der damit einhergeht. Ferner sind solche entlang der Förderstrecke angeordneten Sensoren und die entsprechende Verkabelung Umwelteinflüssen ausgesetzt, die das Erfassen des zu fördernden Förderguts vollständig unterbinden, stören oder zumindest einschränken können. Insbesondere können die Sensoren und auch die Verkabelung, beispielsweise bei Montage-, Instandhaltungs- oder Wartungsarbeiten, beschädigt werden. Solche Störungen können einerseits zum kompletten Stillstand einer Fördervorrichtung führen, was insbesondere in Logistikzentren oder Postverteilzentren zu erheblichen Kosten und Verzögerungen im Ablauf führt. Zum anderen können diese Störungen einen kumulierten Staudruck in der Förderstrecke nach sich ziehen, was zur Beschädigung der Fördergüter führt.

Problematisch an Förderanlagen ist weiterhin auch, dass häufig verschiedene Arten von Sensoren zum Einsatz kommen, um Förderzustände innerhalb der Förderanlage zu erkennen. Dies tritt insbesondere bei Förderanlagen auf, die variable Förderfunktionen ausführen können, beispielsweise Einschleusungen, Ausschleusungen, Heben oder Absenken auf unterschiedliche Ebenen, Zwischenlagern und dergleichen. Sowohl in Förderanlagen, die auf eine zentrale Steuerung aufbauen, als auch in Förderanlagen, die mit dezentralen Steuerungen aufgebaut ist, stellt die Anbindung solcher Sensoren und die Verarbeitung von deren Signalen eine besondere zusätzliche Herausforderung dar. Sofern es hier zu fehlerhaften Anschlüssen bei der Montage, Reparatur oder dergleichen kommt oder sofern die Signalverarbeitung der Sensoren fehlerhaft erfolgt oder programmiert ist, können ebenfalls Fördersituationen auftreten, in denen das Fördergut beschädigt wird. Neben der Beschädigung von Fördergütern kann aber auch der Nachteil entstehen, dass aufgrund von Montagefehlern oder Programmierfehlern die Förderanlage nicht mit der optimalen Förderkapazität betrieben werden kann, beispielsweise, weil zu große Abstände zwischen den Fördergütern eingesteuert werden oder weil zu geringe Fördergeschwindigkeiten eingesteuert werden.

Die WO 2012/175193 A1 offenbart Steuerungssystem für Stauförderer, bei dem Sensoren zur Erkennung der Anwesenheit und Position von Gebinden eingesetzt werden. Diese Sensoren sind über Stauplatz-Steuermodule mit Segmentsteuermodulen verbunden, die die Förderlogik ausführen. Die Kommunikation zwischen den Steuerungen erfolgt über standardisierte Bus-Systeme mit einer zentralen Steuereinheit, die Betriebsparameter festlegt, Zustände überwacht und Fehler diagnostiziert.

Die DE 10 2005 046763 A1 offenbart einen Rollenantrieb mit integrierter elektrischer Maschine, Regelung und Kommunikationseinheit, der in eine Rollentransporteinrichtung eingebettet ist. Die Steuerung erfolgt über ein Bussystem (z. B. ASI-Bus), das entlang der Seitenwangen geführt wird. Die Kommunikationseinheit überträgt Sollwerte von einer übergeordneten Steuerung an den Rollenantrieb. Eine Lichtschranke dient zur Überwachung des Förderguts und liefert Technologiesignale, die über kombinierte Anschlussvorrichtungen (z. B. Piercing-Kontakte) in das System eingebunden werden. Die Seitenwange übernimmt zusätzlich eine Kühlfunktion für die integrierte Elektronik.

Die EP 2 221 695 A1 offenbart eine Förderanlage zum dem Transport einzelner Stückgüter. Die Förderanlage umfasst mehrere Fördermotoren und eine Steuerungseinheit. Die Steuerung ist über eine Busleitung mit den Motoren verbunden. Jeder Motor ist über ein eigenes Modem an die Busleitung angeschlossen, vorzugsweise kontaktlos. Das Modem versorgt den Motor mit Energie und überträgt Steuerdaten aus der Busleitung an den Motor.

Der Artikel "Speicherprogrammierbare Steuerung - Wikipedia", 31.05.2017 (XP055401504) offenbart, Speicherprogrammierbare Steuerungen (SPS) als digitale Steuerungssysteme, die zur automatisierten Regelung von Maschinen und Anlagen eingesetzt werden. Sie ersetzen verbindungsprogrammierte Steuerungen und ermöglichen eine flexible, softwarebasierte Anpassung der Steuerungslogik. Eine SPS besteht typischerweise aus Eingängen, Ausgängen, einem Betriebssystem und einer Schnittstelle zur Programmierung. Die Anbindung erfolgt über Sensoren und Aktoren, wobei die Steuerung auf Basis eines zyklisch abgearbeiteten Anwenderprogramms erfolgt. SPS-Systeme sind in modularer Bauweise, als Einzelgeräte oder als Softwarelösungen verfügbar und kommen in zahlreichen industriellen Anwendungen zum Einsatz.

Der Artikel "Feldbus - Wikipedia", 21.07.2018", XP055676138, offenbart Feldbusse als digitale Kommunikationssysteme zur Vernetzung von Sensoren, Aktoren und Steuergeräten in automatisierten Anlagen. Sie ermöglichen den Austausch von Steuerungs- und Prozessdaten über eine gemeinsame Busleitung und ersetzen konventionelle Punkt-zu-Punkt-Verbindungen. Feldbusprotokolle sind in der Norm IEC 61158 spezifiziert und in IEC 61784 als Kommunikationsprofilfamilien organisiert. Zu den verbreiteten Systemen zählen unter anderem PROFIBUS, CANopen, Modbus und Interbus. Feldbusse zeichnen sich durch reduzierte Verkabelung, Echtzeitfähigkeit und hohe Integrationsdichte aus und finden Anwendung in der Fertigungs- und Prozessautomatisierung.

Die DE 10 2016 120415 A1 offenbart Förderrolle, die ein drehbar gelagertes Rollenrohr und eine darin angeordnete Antriebseinheit aufweist. Energie und Steuerdaten werden über Leitungen von außen zur Antriebseinheit geführt. Die Datenleitung ist als Busleitung ausgeführt und über eine im Rollenrohr integrierte Busschnittstelle mit der Antriebseinheit verbunden.

Der Erfindung liegt die Aufgabe zugrunde, eine Förderanordnung bereitzustellen, welche die sensorseitigen Voraussetzungen für eine einerseits sichere, beschädigungsfreie Förderung von Fördergütern erzielt, zum anderen es ermöglicht, die Förderkapazität der Förderanlage in hohem Maße auszulasten.

Diese Aufgabe wird erfindungsgemäß durch eine Verwendung nach Anspruch 1; Ausgestaltungen sind Gegenstand der Unteransprüche sowie der Beschreibung.

Die verwendete Förderanordnung umfasst eine motorbetriebene Förderrolle, umfassend: einen drehbar um eine Rollenachse gelagerten Rollenkörper, eine innerhalb des Rollenkörpers angeordnete Antriebseinheit, die zwischen den Rollenkörper und ein Achselement mechanisch gekoppelt und ausgebildet ist, um ein Drehmoment zwischen dem Achselement und dem Rollenkörper zu erzeugen, eine mit der Antriebseinheit signaltechnisch verbundene Steuerungs-Datenschnittstelle, eine Steuerungseinheit, umfassend eine Steuerungs-Datenbusschnittstelle, die ausgebildet ist, um mit einer Datenbusleitung verbunden zu werden, wobei die Steuerungseinheit mit der Antriebseinheit in Signalverbindung steht und ausgebildet ist, um über die Steuerungs-Datenbusschnittstelle Bus-kodierte Datensignale zu empfangen, in Abhängigkeit der empfangenen Datensignale ein Steuerungssignal zu generieren und die Antriebseinheit mit einer durch das Steuerungssignal vorbestimmten Charakteristik anzusteuern, indem das Steuerungssignal an die Antriebseinheit gesendet wird und einen Sensor zur Erfassung eines Förderzustands, wobei der Sensor außerhalb des Rollenkörpers angeordnet ist. Es ist ein elektronisches Adressierungsmodul vorgesehen, welches signaltechnisch mit dem Sensor und mit der Busleitung koppelbar und ausgebildet ist, um ein von dem Sensor erzeugtes und in dem Adressierungsmodul empfangenes Sensorsignal zu einem Bus-kodierten Sensordatenblock zu kodieren, der einen digitalen, das Sensorsignal charakterisierenden Digitalsensorsignaldatenblock und einen Sensoradressdatenblock umfasst, und um den Bus-kodierten Sensordatenblock in die Busleitung zu senden.

Der mechanische Aufbau der Förderrolle bewirkt eine drehbare Lagerung eines Rollenkörpers um eine Rollenachse, die als virtuelle Achse ausgebildet sein kann. Der Rollenkörper wird angetrieben mittels einer Antriebseinheit, die ein Drehmoment um diese Rollenachse erzeugt. Die Antriebseinheit ist innerhalb des Rollenkörpers angeordnet und stützt sich in Bezug auf das Drehmoment um die Rollenachse an einem Achselement wie beispielsweise einem Befestigungsschaft zur Befestigung der Förderrolle in einem Gestell ab. Das Achselement ist typischerweise ein Achsstummel oder Befestigungsflansch oder dergleichen, der an einer Seite aus dem Rollenkörper vorsteht, kann aber auch durch zwei an entgegengesetzten Enden des Rollenkörpers angeordnete Achsstummel oder Befestigungsflansche gebildet werden.

Während der Verwendung greift die erfindungsgemäße Förderanordnung ebenfalls auf einen Sensor zurück, der einen Zustand innerhalb der Förderanordnung erfasst. Bei diesem Sensor kann es sich um einen Sensor aus einer Auswahl unterschiedlicher Sensortypen handeln, beispielsweise kann der Sensor ein Lichtschrankensensor, ein Näherungssensor, ein mechanischer Tastsensor, ein Endschalter, ein Wegmesser oder ein Kraftsensor für eine Gewichtsmessung sein. Als Sensor ist im erfindungsgemäßen Sinne auch der Bereich von bilderfassenden Vorrichtungen zu verstehen, die beispielsweise durch Abscannen von Barcodes, Bilderfassen mit Bildauswertung und dergleichen sensorische Informationen gewinnen.

Dabei ist für den Sensor ein elektronisches Adressierungsmodul vorgesehen. Dieses elektronische Adressierungsmodul ist ausgebildet, um einerseits das Sensorsignal zu empfangen. Das Adressierungsmodul kann folglich im einfachsten Fall ein An/Aus-Signal einer Lichtschranke empfangen, in den vorgenannten Fällen von intelligenteren Sensoren jedoch auch komplexe Bildsignalinformationen oder abgescannte analoge oder digitale Informationen. Allgemein kann das Signal, welches vom Sensor an das Adressierungsmodul übermittelt wird, ein analoges oder ein digitales Signal sein. Das Adressierungsmodul kann ausgebildet sein, um sowohl analoge als auch digitale Signale zu verarbeiten. Erfindungsgemäß sind aber auch Ausführungsformen möglich, bei denen das Adressierungsmodul nur für ein analoges Signal oder nur für ein digitales Signal vom Sensor ausgebildet ist.

Das Sensorsignal wird innerhalb des elektronischen Adressierungsmoduls verarbeitet mit dem Ziel, die vom Sensor bereitgestellte Sensorinformation in einem Bus-kodierten Datennetzwerk bereitzustellen. Zu diesem Zweck wird das Sensorsignal einerseits in einen Digitalsensorsignaldatenblock gewandelt, was für analoge Signale erforderlich ist, aber auch zur Formatierung digitaler Signale in ein bestimmtes Datenformat ausgeführt werden kann.

Dies kann bei analogen Sensorsignalen also eine Analog-Digitalwandlung beinhalten. Insbesondere wird das Sensorsignal solcherart in ein digitales Signal gewandelt, dass es nach einem bestimmten Standard, einem bestimmten Datenverarbeitungssystem oder dergleichen lesbar ist und es Empfängern innerhalb des Bus-kodierten Datenverarbeitungssystems ermöglicht, aus dem Digitalsensorsignaldatenblock das Sensorsignal, sei es analog oder digital gewesen, wieder zu ermitteln, auszuwerten und für Steuerungsvorgänge zu verwerten.

Weiterhin ist das elektronische Adressierungsmodul ausgebildet, um dem Sensorsignal einen Sensoradressdatenblock zuzuordnen. Ein solcher Sensorsignaladressdatenblock ist ebenfalls ein digital kodierter Datenblock, der Informationen über den Ursprung der Daten enthält. Anhand des Sensoradressdatenblocks ist es jedem Empfänger innerhalb des Buskodierten Datenverarbeitungssystems also möglich, festzustellen, welchen Ursprung die Sensorsignale haben, die im Digitalsensorsignaldatenblock kodiert sind. Dies kann einerseits eine Identifizierung einer bestimmten Position als Einbauort des Sensors, eine Identifikation des Sensors als unverwechselbare Identifikationskodierung, eine Identifikation des Sensortyps beinhalten. Der Sensoradressdatenblock kann weiterhin digitale Informationen über die Sensorart haben, also beispielsweise die Bauart des Sensors identifizierbar machen. Auch können im Sensoradressdatenblock Informationen über den oder eine Gruppe von Empfängern enthalten sein, für die der Digitalsensorsignaldatenblock bestimmt ist. Weiterhin kann der Sensoradressdatenblock Zeitinformationen enthalten, die angeben, wann die im Digitalsensorsignaldatenblock beschriebenen Sensorsignale ermittelt wurden bzw. an das elektronische Adressierungsmodul übermittelt wurden. Auf diese Art wird das Sensorsignal durch den Sensoradressdatenblock eindeutig nach seinem Ursprung und der Entstehungszeit identifizierbar, quasi also mit einem Orts- und Zeitstempel versehen. Dies macht es jedem Empfänger, der an die Busleitung angeschlossen ist, möglich, die Sensorsignale des Sensors intelligent anhand des Sensordatenblocks zu verarbeiten.

Der Digitalsensorsignaldatenblock und der Sensoradressdatenblock werden zu einem buskodierten Sensordatenblock zusammengefasst, wofür das elektronische Adressierungsmodul ebenfalls ausgebildet ist. Weiterhin ist das elektronische Adressierungsmodul dazu ausgebildet, um den Bus-kodierten Sensordatenblock dann in die Busleitung zu senden. Dieser Sendevorgang erfolgt regelmäßig in einem Busprotokoll, nach dem das elektronische Adressierungsmodul zu arbeiten hat und wofür es entsprechend ausgebildet ist. So wird ein Sensordatenblock nicht zwangsläufig in Echtzeit zu demjenigen Zeitpunkt in die Busleitung gesendet, zu dem das Sensorsignal vom Sensor erzeugt wurde, also der entsprechende Förderzustand durch den Sensor erfasst wurde und das Sensorsignal entsprechend an das elektronische Adressierungsmodul gesendet wurde. Stattdessen kann der Sensordatenblock auch mit einer zeitlichen Verzögerung in die Busleitung gesendet werden, wobei diese zeitliche Verzögerung größer ist als die durch die reine Datenverarbeitung innerhalb des elektronischen Adressierungsmoduls auftretende geringe Zeitverzögerung. Diese zeitliche Verzögerung kann insbesondere dadurch bedingt sein, dass in der Busleitung stets zu bestimmten Programmzeiten gesendet werden darf, diese Programmzeiten können den einzelnen Sensoren bzw. Adressierungsmodulen konkret zugewiesen sein oder die einzelnen, in die Busleitung sendenden Teilnehmer wie das Adressierungsmodul sind dazu ausgebildet, nur dann in die Busleitung Datenblöcke zu senden, wenn kein anderer Teilnehmer in die Busleitung sendet. Das Adressierungsmodul ist folglich auch ausgebildet, um anhand bestimmter Kommunikationsregeln innerhalb des Busleitungssystems, das die Busleitung beinhaltet, in die es senden soll und an die es angeschlossen ist, zu senden und zu empfangen und das eigene Sende- und Empfangsverhalten in die Busleitung entsprechend dieser Kommunikationsregeln auszuführen.

Bevorzugt ist das Adressierungsmodul auch ausgebildet, um aus der Busleitung Bus-kodierte Daten zu empfangen und zu verarbeiten, um hieraus den Sensor anzusteuern. Diese Funktion ist für solche Sensoren relevant, die unterschiedliche Umgebungswerte erfassen können oder die zeitlich angesteuert werden sollen, um eine nach Art der Umgebungswerterfassung oder zeitlich definierte Sensorsignalerzeugung zu generieren. Das Adressierungsmodul ist folglich bevorzugt auch entsprechend ausgebildet, um analoge oder nicht Bus-kodiert ansteuerbare Sensoren entsprechend anhand der empfangenen Buskodierten Daten anzusteuern. Gemäß einer ersten bevorzugten Ausführungsform ist vorgesehen, dass das elektronische Adressierungsmodul außerhalb des Rollenkörpers angeordnet ist und eine Adressierungsmodul-Datenschnittstelle mit einer Adressierungsmodul-Sensordatenschnittstelle zum Anschluss des Sensors und einer Adressierungsmodul-Busdatenschnittstelle zum Anschluss der Busleitung aufweist, wobei das elektronische Adressierungsmodul ausgebildet ist, um das von dem Sensor erzeugte Sensorsignal über die Sensordatenschnittstelle zu empfangen und um den Bus-kodierten Sensordatenblock über die Adressierungsmodul-Busdatenschnittstelle in die Busleitung zu senden. Gemäß dieser Ausführungsform ist das elektronische Adressierungsmodul als separate Einheit außerhalb des Rollenkörpers der Förderrolle in der Förderanordnung ausgebildet. Das elektronische Adressierungsmodul kann beispielsweise als separate elektronische Baueinheit ausgeführt sein. Diese separate elektronische Baueinheit kann in einem separaten Adressierungsmodulgehäuse angeordnet sein, das die entsprechenden Schnittstellen aufweist, um das Sensorsignal zu empfangen und um den Sensordatenblock zu versenden. Die Adressierungsmodul-Sensordatenschnittstelle kann hierbei spezifisch ausgebildet sein, um Sensorsignale von einem bestimmten Sensor zu empfangen. Sie kann auch solcherart ausgebildet sein, um spezifische Signale von unterschiedlichen Arten von Sensoren zu empfangen, beispielsweise indem mehrere unterschiedliche Sensordatenschnittstellen darin umfasst sind oder eine universelle Sensordatenschnittstelle ausgebildet ist.

Die spezifische Ausgestaltung kann sich in Form der Bereitstellung bestimmter Sensordatenleitungsanschlüsse ausbilden, wie in Form von bestimmten Stecker- oder Buchsenformen oder dergleichen. Die Adressierungsmodul-Busdatenschnittstelle kann zum Anschluss einer Busleitung dienen, wobei die Busleitungsart hierbei unterschiedlich ausgewählt sein kann. So kann beispielsweise eine Ausführungsform der Adressierungsmodul-Busdatenschnittstelle in Durchdringungstechnik zum Anschluss einer ASI-Busleitung ausgeführt sein. In anderen Ausgestaltungen kann beispielsweise eine Anschlussweise für einen Profi-Bus oder andere standardisierte Busleitungsarten können anschließbar sein. Es ist zu verstehen, dass diese Art und Wahl des Bus-Standards für alle im Zusammenhang mit der Erfindung stehenden Busschnittstellen und Busleitungen anwendbar ist.

Das elektronische Adressierungsmodul funktioniert gemäß dieser bevorzugten Ausführungsform als Übersetzungseinheit, welche zwischen Sensor und Busleitung geschaltet ist und gesondert im Bereich der Förderanordnung an beliebiger Stelle angeordnet werden kann. Das elektronische Adressierungsmodul gemäß dieser Ausführungsform kann beispielsweise auch als externer Aufsatz an einer Förderrolle angeordnet sein, also außerhalb des Rollenkörpers der Förderanordnung im Bereich eines Achsstummels oder dergleichen platziert sein. Das elektronische Adressierungsmodul kann auch als mittels einer Steckerverbindung steckbare Baueinheit vorgesehen sein, die beispielsweise auf Steuerungseinheiten, an Förderrollen oder dergleichen angesteckt werden kann, um montiert zu werden. Durch das Anstecken kann eine elektrische Verbindung hergestellt werden, welche Teil der Adressierungsmodul-Busdatenschnittstelle oder der Adressierungsmodul-Sensordatenschnittstelle oder beider sein kann, sodass eine an die Steuerungseinheit oder die Förderrolle angeschlossene Sensordatenleitung oder Busleitung hierüber an das Adressierungsmodul angeschlossen wird und zur Übermittlung von Sensorsignalen oder dem Bus-kodierten Sensordatenblock genutzt werden kann.

Noch weiter ist es bevorzugt, wenn die Förderanordnung fortgebildet wird durch ein außerhalb des Rollenkörpers angeordnetes Steuerungsmodul, umfassend die Steuerungseinheit und eine Steuerungsmodul-Datenschnittstelle mit der Steuerungs-Busdatenschnittstelle zum Anschluss der Busleitung und einer Steuerungsmodul-Antriebsdatenschnittstelle zur signaltechnischen Kopplung mit der Antriebseinheit, wobei die Steuerungseinheit innerhalb des Steuerungsmoduls angeordnet, signaltechnisch mit der Steuerungsmodul-Busdatenschnittstelle und der Steuerungsmodul-Antriebsdatenschnittstelle verbunden und ausgebildet ist, um die Steuerungsmodul-Busdatenschnittstelle als Steuerungs-Datenbusschnittstelle zu verwenden und um über die Steuerungsmodul-Antriebsdatenschnittstelle das Steuerungssignal an die Antriebseinheit zu senden. Gemäß dieser Ausführungsform ist die Steuerungseinheit, welche die Antriebseinheit ansteuert, außerhalb des Rollenkörpers angeordnet in einem Steuerungsmodul. Dieses Steuerungsmodul kann räumlich innerhalb der Förderanordnung getrennt von der Förderrolle selbst angeordnet sein und mit dieser beispielsweise über eine Signalsteuerleitung verbunden sein. Das Steuerungsmodul kann alternativ auch an der Förderrolle im Bereich eines Achsstummels befestigt sein und über diese Befestigung auch eine entsprechende elektrische Verbindung zur Übermittlung der Steuerungssignale herstellen. Das Steuerungsmodul weist eine Steuerungsmodul-Datenschnittstelle auf, die einerseits den Anschluss an die Busleitung innerhalb der Förderanordnung ermöglicht und es daher möglich macht, dass die Steuerungseinheit alle über die Busleitung versendeten Informationen empfängt und verarbeitet. Weiterhin ist eine Steuerungsmodul-Antriebsdatenschnittstelle an dem Steuerungsmodul vorgesehen, welche die Verbindung zur Signalübertragung von der Steuerungseinheit zu der Antriebseinheit ermöglicht. Sowohl die Steuerungsmodul-Busdatenschnittstelle als auch die Steuerungsmodul-Antriebsdatenschnittstelle kann durch entsprechende Buchsen oder Stecker ausgebildet sein, oder es kann ein Anschluss in Durchdringungstechnik oder durch Einzel-Litzenverbindung oder dergleichen an der Schnittstelle ausgeführt sein.

Dabei ist es besonders bevorzugt, wenn die Steuerungsmodul-Datenschnittstelle eine Sensordatenschnittstelle umfasst und das elektronische Adressierungsmodul innerhalb des Steuerungsmoduls angeordnet und ausgebildet ist, um das von dem Sensor erzeugte Sensorsignal über die Sensordatenschnittstelle zu empfangen und um den Digitalsensorsignaldatenblock über die Steuerungsmodul-Busdatenschnittstelle in die Busleitung zu senden. Gemäß dieser Ausführungsform ist das elektronische Adressierungsmodul innerhalb des Steuerungsmoduls angeordnet. Insbesondere kann das elektronische Adressierungsmodul integral mit der Steuerungseinheit innerhalb dieses Steuerungsmoduls ausgeführt sein, also als elektronische Schaltung gemeinsam mit der Steuerungseinheit verwirklicht sein. Diese Integration von Adressierungsmodul und Steuerungseinheit in dem Steuerungsmodul ermöglicht einen kompakten Aufbau und eine einfache Anschlussweise innerhalb der erfindungsgemäßen Förderanordnung. Das Steuerungsmodul weist zu diesem Zweck eine zusätzliche Sensordatenschnittstelle auf, an welche ein Sensor zur Übermittlung von Sensorsignalen in das Steuerungsmodul angeschlossen werden kann. Innerhalb des Steuerungsmoduls kann dieses Sensorsignal folglich einerseits durch das Adressierungsmodul verarbeitet werden und in die Busleitung eingespeist werden. Zum anderen kann das Sensorsignal auch direkt durch die Steuerungseinheit verarbeitet werden, beispielsweise, um hieraus ein Steuerungssignal zu generieren und an die Antriebseinheit zu senden. Alternativ kann die Steuerungseinheit auch das von dem Adressierungsmodul erzeugte Bus-kodierte Sensorsignal empfangen und verarbeiten, indem es die über die Busleitung empfangenen Signale aus der Steuerungsmodul-Busdatenschnittstelle empfängt und verarbeitet, um hieraus Steuersignale für die Antriebseinheit zu generieren und an diese zu versenden.

Gemäß einer weiteren bevorzugten Ausführungsform ist vorgesehen, dass die Steuerungseinheit in dem Rollenkörper angeordnet und eine Sensordatenschnittstelle zum Anschluss des Sensors aufweist und ausgebildet ist, um das Sensorsignal über die Sensordatenschnittstelle zu empfangen. Gemäß dieser Ausführungsform ist die Steuerungseinheit in dem Rollenkörper angeordnet und verfügt über eine Möglichkeit zum Anschluss des Sensors mittels einer Sensordatenschnittstelle. Grundsätzlich kann es sich bei dieser Sensordatenschnittstelle um die Steuerungs-Datenbusschnittstelle handeln, das heißt die Steuerungs-Datenbusschnittstelle und die Sensordatenschnittstelle sind integral ausgeführt und die Sensordaten werden durch die Steuerungseinheit über die Steuerungs-Datenbusschnittstelle als Bus-kodierte Sensordatensignale empfangen. Diese Ausgestaltung ist beispielsweise dann vorteilhaft, wenn das Adressierungsmodul als separate Baueinheit außerhalb des Rollenkörpers angeordnet ist und daher in der Busleitung bereits Bus-kodierte Sensorsignaldaten vorliegen. Die Sensordatenschnittstelle kann aber auch als eigene Schnittstelle getrennt von der Steuerungs-Datenbusschnittstelle der Steuerungseinheit ausgeführt sein, beispielsweise in der zuvor beschriebenen Art ausgeführt wie die Adressierungsmodul-Sensordatenschnittstelle zum direkten Anschluss von analoge oder digitale Sensorsignale ausgebenden Sensoren. Durch die Steuerungseinheit in dem Rollenkörper werden die logischen Steuerungsschritte und Steuerungsentscheidungen innerhalb des Rollenkörpers ausgeführt. Sowohl eine zentrale als auch eine dezentrale Steuerungseinheit außerhalb des Rollenkörpers ist bei dieser Ausführungsform nicht mehr erforderlich und kann daher vorzugsweise entfallen. Die in dem Rollenkörper angeordnete Steuerungseinheit empfängt über die Sensordatenschnittstelle und die Steuerungs-Datenbusschnittstelle alle erforderlichen Signaldaten, um eine logische steuerungstechnische Entscheidung zu treffen, wie die Antriebseinheit der Förderrolle anzusteuern ist. Insbesondere umfasst diese Steuerungsentscheidung den binären Steuerungsbefehl, die Antriebseinheit anzuschalten oder abzuschalten, darüber hinaus aber auch weitere Steuerungsbefehle, welche Beschleunigungsverhalten, Bremsverhalten, Maximalgeschwindigkeit der Antriebseinheit betreffen. Weiterhin kann die Steuerungseinheit Überwachungsfunktionen der Antriebseinheit übernehmen und hierfür ausgebildet sein, wie beispielsweise Motorstrommessungen, Temperaturerfassung, Erfassen von Betriebsdauer der Antriebseinheit und Maximalbelastungsparameter, Abspeichern solcher Werte und die Möglichkeit, diese Werte aus der Steuerungseinheit auslesen zu können, um sie an eine Empfangseinheit außerhalb des Rollenkörpers zu senden. Die Steuerungseinheit kann weiterhin eine Kommutierungselektronik umfassen, um bürstenlose Elektromotoren anzusteuern. Durch die Anordnung der Steuerungseinheit in dem Rollenkörper ist eine direkte signaltechnische Verbindung und Kommunikation zwischen zwei benachbarten Förderrollen in der Förderanordnung möglich. Insbesondere können beispielsweise mittels der Busleitung von einer Steuerungs-Datenbusschnittstelle der einen Förderrolle zu anderen Steuerungs-Datenbusschnittstelle einer Vielzahl anderer Förderrollen Daten übermittelt werden, ohne dass hierbei eine dezentrale oder zentrale Steuerungseinheit außerhalb der Förderrollenkörper beider Förderrollen zwischengeschaltet oder eingeschaltet ist.

Dabei ist es besonders bevorzugt, wenn das elektronische Adressierungsmodul in dem Rollenkörper angeordnet ist und die Sensordatenschnittstelle mit dem elektronischen Adressierungsmodul verbunden ist, wobei das elektronische Adressierungsmodul vorzugsweise ausgebildet ist, um über die Steuerungs-Datenbusschnittstelle den Buskodierten Sensordatenblock zu senden. Gemäß dieser Ausführungsform erfolgt die Buskodierung des Sensorsignals ebenfalls innerhalb des Rollenkörpers, indem das elektronische Adressierungsmodul in dem Rollenkörper angeordnet ist. Das elektronische Adressierungsmodul kann hierbei insbesondere integral mit der Steuerungseinheit ausgeführt sein. Funktionell kann das elektronische Adressierungsmodul über die Sensordatenschnittstelle Sensorsignale empfangen und diese Sensorsignale in der zuvor erläuterten Weise als Bussignale kodieren und dann über einen entsprechenden Anschluss an die Busleitung als Bus-kodierten Sensordatenblock in die Busleitung senden. Dieser Anschluss an die Busleitung kann vorzugsweise durch die Steuerungs-Datenbusschnittstelle gebildet werden, sodass der Empfang von steuerungsrelevanten Signalen aus der Busleitung und die Versendung des Bus-kodierten Sensordatenblocks über ein und dieselbe Busschnittstelle erfolgt. Die integrale Ausführung der Steuerungseinheit und des Adressierungsmoduls ermöglicht darüber hinaus eine wahlweise separate oder gemeinsame Versendung von Busdaten aus der Sensorrolle. So kann ein Datenpaket aus der Förderrolle heraus durch die Steuerungseinheit versendet werden, welches Dateninhalte enthält, die den Betriebszustand der Antriebseinheit charakterisieren, also beispielsweise Geschwindigkeit, Beschleunigung, Bremsverhalten oder unveränderliche Parameter der Förderrolle. Weiterhin kann ein Datenpaket versendet werden, welches dem zuvor erläuterten Sensordatenblock entspricht und die Buskodierten Sensorsignale einschließlich Adressierung und gegebenenfalls Zeitstempel beinhaltet. Alternativ können aber auch beide Datenpakete als ein gemeinsames Datenpaket versendet werden. In diesem Fall kann beispielsweise dem Sensor und der Förderrolle ein und dieselbe Busadresse zugewiesen sein, die physikalisch beispielsweise einer Förderzone entsprechen kann. Das Datenpaket enthält in diesem Fall einerseits den Sensordatenblock, andererseits zusätzliche Dateninhalte, welche den Betriebszustand der Antriebseinheit charakterisieren. So kann aus einer Förderzone gemeinsam sämtliche für benachbarte Förderzonen relevante Information in einem einzigen Datenpaket aus dem Rollenkörper heraus in die Busleitung gesendet werden.

Noch weiter ist es bevorzugt, wenn der Sensor ausgebildet ist, um ein durch die Förderrolle gefördertes Fördergut zu erfassen und um ein Sensorsignal zu generieren, welches die Anwesenheit oder die Abwesenheit eines Förderguts in einem von dem Sensor überwachten Sensorbereich signalisiert. Gemäß dieser Ausführungsform ist der Sensor zur Erfassung von Fördergut ausgebildet. Der Sensor kann zu diesem Zweck insbesondere ein Lichtschrankensensor sein. Durch diese Art Sensor wird ein direkt für die Steuerung der Antriebseinheit relevanter Zustand innerhalb der Förderzone erfasst. Diese unmittelbare Relevanz ist im Zusammenhang mit der direkten Verarbeitung des Sensorsignals und dessen Bus-kodierung besonders vorteilhaft für eine schnelle und zuverlässige Datenverarbeitung. Der Sensor kann hierbei grundsätzlich auch innerhalb des Rollenkörpers angeordnet sein. So kann beispielsweise eine aufliegende Last auf der Förderrolle durch den Sensor detektiert werden, beispielsweise indem eine mechanische Beanspruchung in Form einer Spannung oder Dehnung an lasttragenden Bauteilen durch den Sensor erfasst wird, der Sensor kann beispielsweise als Dehnungsmessstreifen in die Rolle integriert sein. Andere Sensorformen, die innerhalb der Rolle angeordnet sind, sind ebenfalls denkbar, beispielsweise eine elektrostatische Felderfassung um den Rollenkörper herum durch einen entsprechend ausgebildeten Sensor. Der Sensor kann auch integral durch Auswertung von Betriebsparametern der Antriebseinheit gebildet werden. So kann beispielsweise durch Differenzierung der Belastung der Antriebseinheit beim Beschleunigen, beim Konstantfahren oder beim Abbremsen ermittelt werden, ob die Förderrolle ein Fördergut fördert oder leer läuft und hierdurch die Anwesenheit eines Förderguts oberhalb der Förderrolle bestimmt werden.

Noch weiter ist es bevorzugt, wenn das elektronische Adressierungsmodul an dem Sensor ausgebildet ist und eine Adressierungsmodul-Busdatenschnittstelle zum Anschluss der Busleitung aufweist, wobei das elektronische Adressierungsmodul ausgebildet ist, um den Digitalsensorsignaldatenblock über die Adressierungsmodul-Busdatenschnittstelle in die Busleitung zu senden. Gemäß dieser Ausführungsform ist der Sensor integral mit dem Adressierungsmodul ausgebildet. Der Sensor ist folglich bereits dafür ausgebildet, um Bus-kodierte Sensorsignale in die Busleitung zu senden und der Anschluss des Sensors erfolgt unmittelbar an die Busleitung. Diese Ausführungsform eignet sich insbesondere für neue oder neu in bestehende Förderanordnungen integrierte Sensoren, die nach neuem Ausrüstungsstandard bereits als Bus-kodierende Sensoren ausgeführt sind. Gemäß der Erfindung ist hierbei besonders vorteilhaft, dass eine solche Integration von neuen Sensoren in bestehende Förderanordnungen ausgeführt werden kann und die in der Förderanordnung weiterhin vorhandenen Sensoren durch entsprechende Kodierung mittels elektronischer Adressierungsmodule in den Bus-kodierten Signalaustausch innerhalb der Förderanordnung vollständig integriert werden können.

Gemäß einer weiteren bevorzugten Ausführungsform ist vorgesehen, dass der Sensor ausgebildet ist, um eine dem Fördergut zugeordnete Identitätskodierung oder ein dem Fördergut zugeordnetes Förderziel zu erfassen und dass die Steuerungseinheit ausgebildet ist, um anhand des Sensorsignals, das die dem Fördergut zugeordnete Identitätskodierung oder das dem Fördergut zugeordnete Förderziel beinhaltet, ein Steuerungssignal zu erzeugen und an einen Aktuator an einem Verzweigungs-, Kreuzungs- oder Zusammenführungsförderelement (auch als Divert, Crossing und Merge bezeichnet) zu übermitteln, welches den Aktuator ansteuert und so eine Förderung in eine aus der Identitätskodierung oder dem Förderziel ableitbare, hierfür erforderliche oder bevorzugte Richtung bewirkt. Gemäß dieser Ausführungsform wird mittels des Sensors ein Signal erzeugt, dass entweder die Identität eines von dem Sensor erfassten Förderguts oder ein Förderziel innerhalb einer Förderanordnung für ein vom Sensor erfasstes Fördergut charakterisiert. Dies kann beispielsweise mittels Auslesen eines an dem Fördergut angeordneten Barcodes, eines RFID-Tags oder dergleichen erfolgen. Dieses Sensorsignal wird von der Steuerungseinheit verarbeitet, was beispielsweise im Falle eines Identitätscharakterisierenden Sensorsignals einen Abgleich in einer Förderanweisungstabelle beinhalten kann, in der für jedes identifizierte Fördergut ein Förderziel vermerkt und abgespeichert ist. Ergebnis dieser Verarbeitung ist ein Steuersignal, mit dem ein Aktuator angesteuert wird. Der Aktuator kann eine Hebe- oder Absenkeinrichtung ansteuern, er kann Ausschleusefördereinheiten oder Einschleusefördereinheiten ansteuern oder in sonstiger Weise richtungsbeeinflussenden Förderelemente ansteuern. Das Steuersignal bewirkt dabei eine solche Ansteuerung, die das Fördergut in eine bestimmte Richtung von verschiedenen Richtungen lenkt, die das Fördergut zum Förderziel führen.

Im Rahmen der Erfindung kann eine motorbetriebene Förderrolle für eine Förderanordnung werden, , umfassend einen drehbar um eine Rollenachse gelagerten Rollenkörper, eine innerhalb des Rollenkörpers angeordnete Antriebseinheit, die mit dem Rollenkörper und einem Achselement mechanisch gekoppelt und ausgebildet ist, um ein Drehmoment zwischen dem Achselement und dem Rollenkörper zu erzeugen, eine mit der Antriebseinheit signaltechnisch verbundene Steuerungs-Datenschnittstelle, eine Steuerungseinheit, umfassend eine Steuerungs-Datenbusschnittstelle, die ausgebildet ist, um mit einer Datenbusleitung verbunden zu werden, wobei die Steuerungseinheit mit der Antriebseinheit in Signalverbindung steht und ausgebildet ist, um über die Steuerungs-Datenbusschnittstelle Bus-kodierte Datensignale zu empfangen, in Abhängigkeit der empfangenen Datensignale ein Steuerungssignal zu generieren und die Antriebseinheit mit einer durch das Steuerungssignal vorbestimmten Charakteristik anzusteuern, indem das Steuerungssignal an die Antriebseinheit gesendet wird, welche dadurch fortgebildet ist, dass die Steuerungseinheit in dem Rollenkörper angeordnet und ausgebildet ist, um ein Bus-kodiertes Sensorsignal über die Steuerungs-Datenbusschnittstelle zu empfangen.

Gemäß diesem Aspekt ist die von der verwendeten Förderanordnung umfasst motorbetriebene Förderrolle zur Verarbeitung von Bus-kodierten Sensorsignalen ausgebildet. Die motobetriebene Förderrolle kann insbesondere in Förderanordnungen verwendet werden, wie sie zuvor beschrieben wurden. In dieser Art von Förderanordnung liegen die Sensorsignale aufgrund der erfolgenden Kodierung im Adressierungsmodul in Form von Bus-kodierten Sensorsignalen vor und können folglich durch die Förderrolle als entsprechende Bus-kodierte Sensorsignale empfangen werden.

Die motorbetriebene Förderrolle gemäß dieses Aspekts der Erfindung kann dabei insbesondere dadurch fortgebildet werden, dass die Steuerungseinheit eine Sensordatenschnittstelle und ein elektronisches Adressierungsmodul umfasst, welches signaltechnisch über die Sensordatenschnittstelle mit einem Sensor und mit der Busleitung koppelbar und ausgebildet ist, um ein über die Sensordatenschnittstelle in dem Adressierungsmodul empfangenes Sensorsignal zu einem Bus-kodierten Sensordatenblock zu kodieren, der einen digitalen, das Sensorsignal charakterisierenden Digitalsensorsignaldatenblock und einen Sensoradressdatenblock umfasst, und um den Bus-kodierten Sensordatenblock in die Busleitung zu senden. Gemäß dieser Fortbildungsform ist das Adressierungsmodul, welches die Buskodierung der Sensorsignale durchführt, innerhalb des Rollenkörpers angeordnet, daher kann die Förderrolle gemäß dieses Aspekts der Erfindung einerseits Sensorsignale empfangen, die nicht Bus-kodiert sind und diese Sensorsignale entsprechend Buskodieren, wobei die Verarbeitung der Sensorsignale innerhalb der Steuerungseinheit zum Zwecke der Generierung von Steuersignalen für die Antriebseinheit auf Grundlage dieser Sensorsignale erfolgen, in dem die nicht-Bus-kodierten Sensorsignale verarbeitet werden oder in dem die Bus-kodierten Sensorsignale verarbeitet werden. Weiterhin kann die Steuerungseinheit dazu ausgebildet sein, um Bus-kodierte Sensordatenblöcke aus der Busleitung zu empfangen und diese zu verarbeiten. Dies beinhaltet sowohl Bus-kodierte Sensordatenblöcke, die durch das in der Förderrolle selbst enthaltene elektronische Adressierungsmodul kodiert und versendet wurden, als auch Bus-kodierte Sensordatenblöcke, die von anderen Sensoren außerhalb der Rolle erstellt und durch außerhalb der Rolle angeordnete elektronische Adressierungsmodule Bus-kodiert wurden.

Die von der verwendeten Förderanordnung umfasste motorbetriebene Förderrolle kann weiterhin dadurch fortgebildet werden, dass die Steuerungseinheit ausgebildet ist, um das Steuerungssignal in Abhängigkeit des Bus-kodierten Sensordatenblocks zu generieren. Gemäß dieser Fortbildungsform ist die Steuerungseinheit dazu ausgebildet, um den Buskodierten Sensordatenblock der Generierung des Steuerungssignals zugrunde zu legen. Demgemäß erfolgt die Steuerungsweise durch die Steuerungseinheit derart, dass ein in der Förderrolle empfangenes nicht-Bus-kodiertes Sensorsignal zunächst durch das Adressierungsmodul in der Förderrolle, also innerhalb des Rollenkörpers der Förderrolle, in einem Bus-kodierten Sensordatenblock kodiert und über die Busleitung versendet wird. Dieser Bus-kodierte Sensordatenblock wird durch die Steuerungseinheit verarbeitet, wobei die Verarbeitung nach Empfang des Signals aus der Busleitung oder durch direkte Übermittelung vom Adressierungsmodul erfolgen kann. Auf Grundlage des Inhalts dieses Bus-kodierten Sensordatenblocks erfolgt dann die Generierung des Steuerungssignals zur Ansteuerung Die Erfindung wird anhand der beiliegenden Figuren beschrieben. Es zeigen:
Fig. 1 eine erste Ausführungsform einer verwendeten Förderanordnung gemäß der Erfindung,
Fig. 2 eine zweite Ausführungsform einer verwendeten Förderanordnung gemäß der Erfindung,
Fig. 3 eine dritte Ausführungsform einer verwendeten Förderanordnung gemäß der Erfindung,
Fig. 4 eine vierte Ausführungsform einer verwendeten Förderanordnung gemäß der Erfindung und
Fig. 5 eine fünfte Ausführungsform einer verwendeten Förderanordnung gemäß der Erfindung.

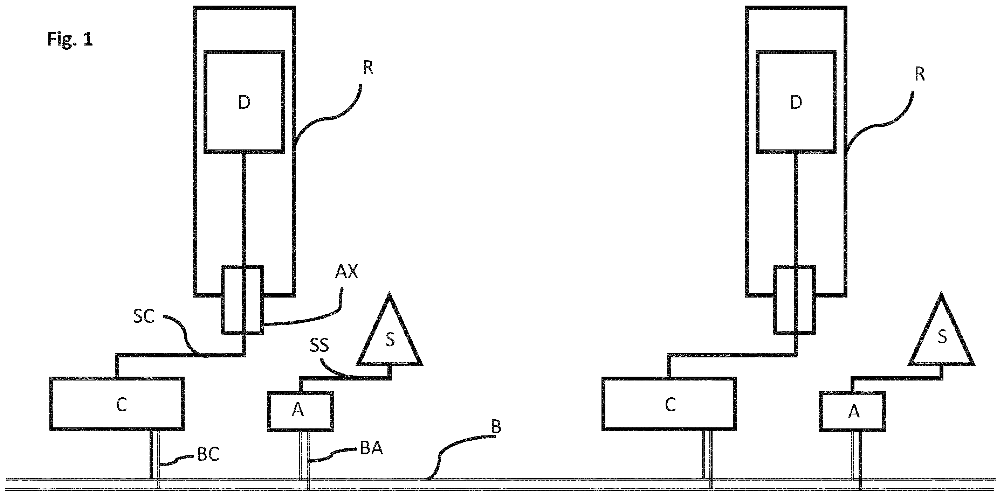

Bezugnehmend zunächst auf Fig. 1 ist ein Ausschnitt einer Förderanordnung gezeigt, die mehrere Förderrollen aufweist, die solcherart angeordnet sein können, dass sie eine Förderstrecke bilden. Jede Förderrolle weist einen Rollenkörper R auf und ist in einer entsprechenden Förderzone angeordnet. Abgebildet ist ein Ausschnitt mit zwei Förderzonen und entsprechend zwei Förderrollen.

Innerhalb des Rollenkörpers ist eine Antriebseinheit D angeordnet, die zwischen einem Achsstummel AX und dem Rollenkörper R ein Drehmoment erzeugt und folglich den Rollenkörper in Rotation in Bezug auf den Achsstummel AX versetzt.

In der in Fig. 1 gezeigten Ausführungsform wird die Antriebseinheit D über eine Steuerleitung SC angesteuert. Diese Steuerleitung verbindet die Antriebseinheit mit einer Steuerungseinheit C, die außerhalb des Rollenkörpers angeordnet ist. Die Steuerleitung SC ist daher durch den Achsstummel AX, der als Hohlachse ausgebildet ist, geführt. Es ist zu verstehen, dass weiterhin eine Energieversorgung zu der Antriebseinheit geführt werden muss, die ebenfalls durch entsprechende Energieleitungen, die durch den Achsstummel AX geführt sind, ausgeführt sein kann. Diese Energieleitung ist in den Figuren nicht abgebildet.

Die Steuerungseinheit C ist mittels einer Busverbindung BC mit einer Busleitung B verbunden. Diese Busleitung B verbindet die Steuerungseinheiten der einzelnen Förderzonen miteinander und ermöglicht eine Kommunikation unter diesen Steuerungseinheiten.

Weiterhin vorgesehen ist ein Sensor S, der die Anwesenheit oder Abwesenheit eines Fördergutes im Bereich der Förderrolle detektieren kann. Dieser Sensor gibt ein analoges Signal heraus, das über eine Sensorsignalleitung SS an ein Adressierungsmodul A gesendet wird. Das Adressierungsmodul ist außerhalb des Rollenkörpers angeordnet und getrennt von der Steuerungseinheit C angeordnet. Im Adressierungsmodul wird das Sensorsignal Bus-kodiert und als Sensordatenblock über eine Busanschlussleitung BA in die Busleitung B eingespeist. Für jeden an die Busleitung B angeschlossenen Empfänger ist dieses Sensorsignal folglich empfangbar und dahingehend identifizierbar, dass es von einem bestimmten Sensor in einer bestimmten Förderzone stammt und zu einem bestimmten Zeitpunkt erfasst wurde. Die Busanschlussleitung BA dient auch dazu, dass das Adressierungsmodul A aus der Busleitung Daten empfangen kann.

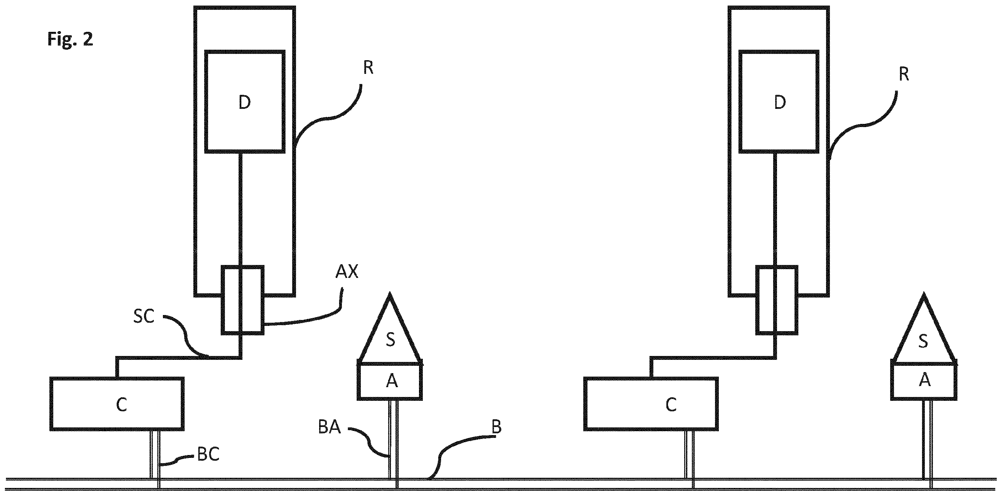

Fig. 2 zeigt eine zweite Ausführungsform, die sich von der ersten Ausführungsform unterscheidet. Der Unterschied liegt hierbei darin, dass der Sensor S in dieser Ausführungsform bereits als Bus-kodierender Sensor ausgeführt ist. Der Sensor beinhaltet daher ein Adressierungsmodul, welches die Sensorsignale als Bus-kodierte Sensorsignale aus dem Sensor herausgibt. Sensor und Adressierungsmodul sind integral in einem Sensorgehäuse ausgeführt. Das Sensorgehäuse ist folglich über eine Busanschlussleitung BA direkt mit der Busleitung verbunden. Die solcherart eingespeisten Sensorsignale in Form eines Buskodierten Sensordatenpakets können von den angeschlossenen Empfängern empfangen und verarbeitet werden, wie gemäß Fig. 1.

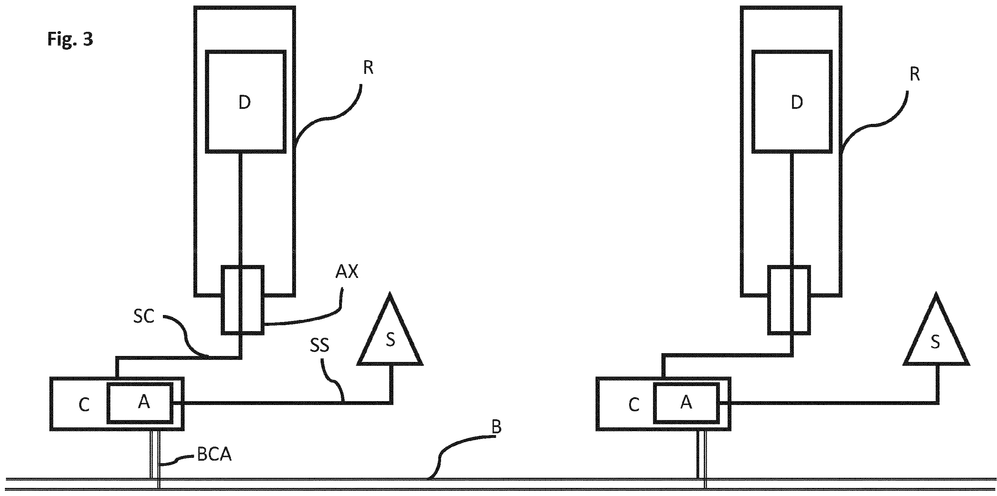

Fig. 3 zeigt eine dritte Ausführungsform der Erfindung. Bei dieser Ausführungsform ist das Adressierungsmodul A in die Steuerungseinheit C integriert. Der Sensor S ist folglich mittels der Sensorleitung SS mit der Steuerungseinheit C verbunden, um das Sensorsignal dem Adressierungsmodul A zuzuführen. Das so zugeführte Sensorsignal kann innerhalb der Steuerungseinheit C unmittelbar verarbeitet werden. Das Sensorsignal wird über einen Busanschluss BCA in die Busleitung B eingespeist. Der Busanschluss BCA dient auch dazu, dass die Steuerungseinheit oder das Adressierungsmodul A aus der Busleitung Daten empfangen kann oder in die Busleitung Daten senden kann, wie beispielsweise Betriebsdaten der Antriebseinheit D oder der Förderrolle.

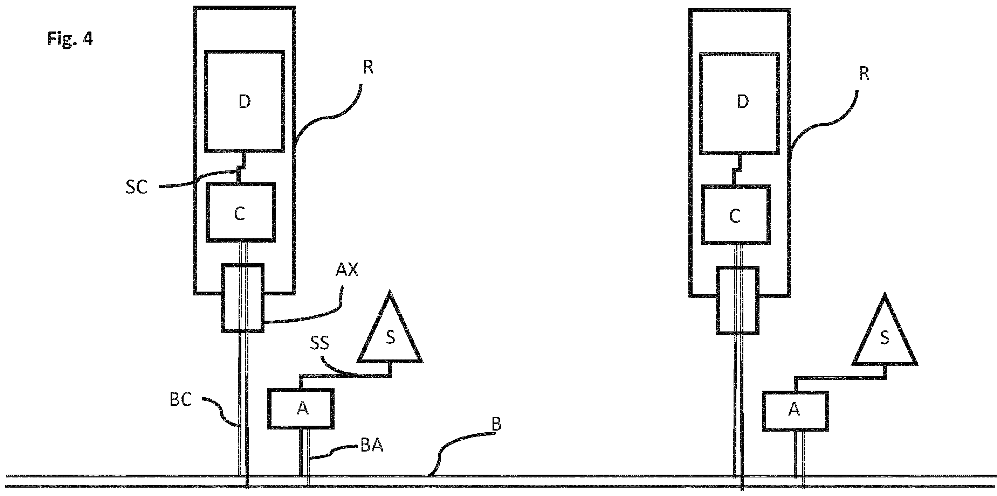

Fig. 4 zeigt eine vierte Ausführungsform. Bei dieser Ausführungsform ist die Steuerungseinheit C in den Rollenkörper R integriert. Die Anschlussleitung BC für die Verbindung zwischen der Steuerungseinheit C und der Busleitung B erstreckt sich folglich durch den Achsstummel AX und verbindet die Steuerungseinheit im Inneren des Rollenkörpers direkt mit der Busleitung. Bus-kodierte Steuerungssignale können daher direkt in den Rollenkörper gesendet werden und dort von der Steuerungseinheit empfangen werden.

Der Sensor S mit Adressierungsmodul A, Sensorleitung SS und Anschlussleitung BA ist bei dieser Ausführungsform ausgeführt wie bei Fig. 1. Grundsätzlich ist zu verstehen, dass auch eine Ausführung gemäß Fig. 2 mit integral am Sensor ausgebildetem Adressierungsmodul bei dieser Ausführungsform vorgesehen sein kann.

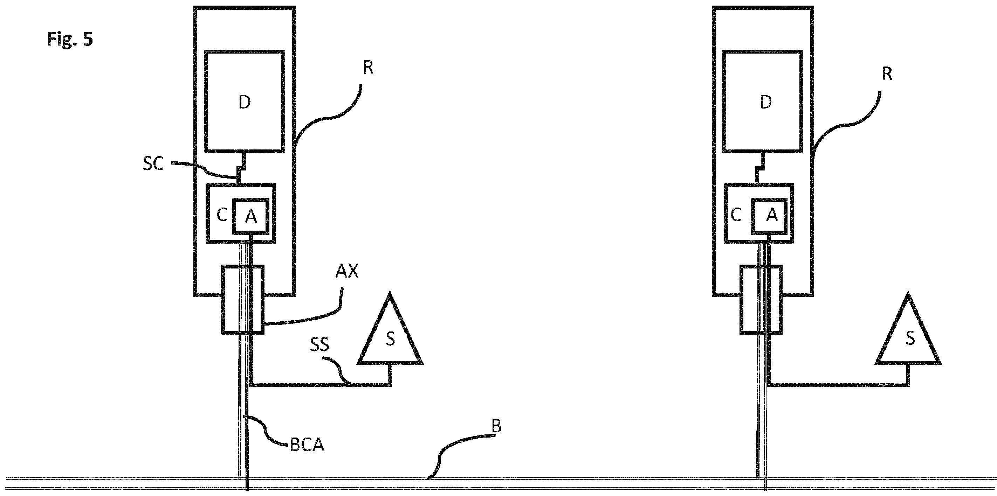

Fig. 5 zeigt eine fünfte Ausführungsform. Auch bei dieser Ausführungsform ist die Steuerungseinheit in den Rollenkörper R integriert, also innerhalb des Rollenkörpers R angeordnet.

Das Adressierungsmodul A ist in die Steuerungseinheit C integriert, also ebenfalls innerhalb des Rollenkörpers angeordnet. Die Sensorsignalleitung SS erstreckt sich daher vom Sensor durch den Achsstummel AX in das Innere des Rollenkörpers, um das Sensorsignal an das Adressierungsmodul zu übermitteln. Weiterhin erstreckt sich eine Busleitung BCA durch den Achsstummel, welche die Steuerungseinheit und das Adressierungsmodul mit der Busleitung B verbindet. Die Verarbeitung der entsprechenden Signale durch die Steuerungseinheit mit integriertem Adressierungsmodul kann bei dieser Ausführungsform in gleicher Weise ausgeführt sein wie bei der dritten Ausführungsform. Es ergibt sich hieraus ein besonders kompakter Aufbau der Förderanordnung mit sehr geringem Verkabelungsaufwand.

Grundsätzlich ist zu verstehen, dass die fünf gezeigten Ausführungsformen jeweils Grundlage einer Förderanordnung sein können, die insgesamt einheitlich nach einer der Ausführungsformen aufgebaut ist. Allerdings können aufgrund der hier verbindenden Busleitung, welche eine einheitliche Signalübertragung jeweils in jeder der Ausführungsformen gewährleistet, auch jegliche Mischformen unter den fünf Ausführungsformen in einer Förderanordnung realisiert sein. Dies bedeutet, dass in einer Förderanordnung sowohl eine Förderrolle und ein Sensor mit Anschlusskonzept nach der ersten Ausführungsform an eine Busleitung angeschlossen sein kann, an welche auch eine Förderrolle und Sensor nach Anschlussweise gemäß der zweiten Ausführungsform, eine Förderrolle und Sensor nach Anschlussweise der dritten Ausführungsform und/oder der vierten Ausführungsform und/oder der fünften Ausführungsform angeschlossen sein kann. Theoretisch können alle fünf gezeigten Ausführungsformen in einer einzigen Förderanordnung miteinander kombiniert werden und über die Busleitung miteinander so kommunizieren, dass jegliche Förderablaufsteuerungen damit realisierbar sind. Diese Kombinierbarkeit macht die erfindungsgemäße Ausgestaltung besonders vielseitig und variabel im Hinblick auf eine Nachrüstung bestehender Förderanlagen, eine Integration unterschiedlicher Sensoren und Anschlusskonzepte in hochkomplexen Förderanordnungen. Insbesondere können auch Erweiterungen und Ersatz defekter Bauteile in solchen Förderanordnungen mit der erfindungsgemäßen Ausführungsform realisiert werden.

### Bezugszeichenliste

- A: Adressierungsmodul
- AX: Achsstummel, Achselement
- B: Busleitung
- BA: Busanschlussleitung
- BC: Busverbindung
- BCA: Busanschluss
- C: Steuerungseinheit
- D: Antriebseinheit
- R: Rollenkörper
- S: Sensor
- SC: Steuerleitung
- SS: Sensorsignalleitung

## Patentansprüche

1. Verwendung einer Förderanordnung, die Förderanordnung umfasst
a) eine motorbetriebene Förderrolle, umfassend:
- einen drehbar um eine Rollenachse gelagerten Rollenkörper (R),
- eine innerhalb des Rollenkörpers angeordnete Antriebseinheit (D), die zwischen den Rollenkörper (R) und einem Achselement mechanisch gekoppelt und ein Drehmoment zwischen dem Achselement und dem Rollenkörper (AX) erzeugt,
- eine mit der Antriebseinheit (D) signaltechnisch verbundene Steuerungs-Datenschnittstelle,
b) eine Steuerungseinheit (C), umfassend eine Steuerungs-Datenbusschnittstelle, die mit einer Datenbusleitung (B) verbunden ist, wobei die Steuerungseinheit (C) mit der Antriebseinheit (D) in Signalverbindung steht und über die Steuerungs-Datenbusschnittstelle Bus-kodierte Datensignale empfängt, und welche in Abhängigkeit der empfangenen Datensignale ein Steuerungssignal generiert und die Antriebseinheit (D) mit einer durch das Steuerungssignal vorbestimmten Charakteristik ansteuert, indem das Steuerungssignal an die Antriebseinheit (D) gesendet wird,
c) einen Sensor (S), der einen Förderzustand erfasst, wobei der Sensor (S) außerhalb des Rollenkörpers (R) angeordnet ist und ausgebildet ist, um ein durch die Förderrolle gefördertes Fördergut zu erfassen und um ein Sensorsignal zu generieren, welches die Anwesenheit oder die Abwesenheit eines Förderguts in einem von dem Sensor überwachten Sensorbereich signalisiert,
**gekennzeichnet durch**,
d) ein elektronisches Adressierungsmodul (A), welches signaltechnisch mit dem Sensor und (S) mit der Busleitung (B) gekoppelt ist und welcher
- ein von dem Sensor (S) erzeugtes und in dem Adressierungsmodul (A) empfangenes Sensorsignal zu einem Bus-kodierten Sensordatenblock kodiert, der einen digitalen, das Sensorsignal charakterisierenden Digitalsensorsignaldatenblock und einen Sensoradressdatenblock umfasst, wobei der Sensoradressdatenblock Informationen über den Einbauort des Sensors und einen Zeitstempel umfasst, sodass das Sensorsignal eindeutig nach Ursprung und Erfassungszeit identifizierbar ist, und
- den Bus-kodierten Sensordatenblock in die Busleitung (B) sendet,
e) wobei die Steuerungseinheit (C) das von dem Adressierungsmodul (A) erzeugte Bus-kodierte Sensorsignal empfängt und verarbeitet, indem es die über die Busleitung empfangenen Signale aus der Steuerungsmodul-Busdatenschnittstelle empfängt und verarbeitet, und hieraus Steuersignale für die Antriebseinheit (D) generiert und an diese versendet.

2. Verwendung nach Anspruch 1,
**dadurch gekennzeichnet,**
**dass** das elektronische Adressierungsmodul (A) außerhalb des Rollenkörpers (R) angeordnet ist und eine Adressierungsmodul-Datenschnittstelle mit einer Adressierungsmodul-Sensordatenschnittstelle zum Anschluss des Sensors und einer Adressierungsmodul-Busdatenschnittstelle zum Anschluss der Busleitung aufweist,
wobei das elektronische Adressierungsmodul,
- das von dem Sensor erzeugte Sensorsignal über die Sensordatenschnittstelle empfängt und
- den Bus-kodierten Sensordatenblock über die Adressierungsmodul-Busdatenschnittstelle in die Busleitung (B) sendet.

3. Verwendung nach Anspruch 1 oder 2,
**gekennzeichnet durch**
ein außerhalb des Rollenkörpers (R) angeordnetes Steuerungsmodul, umfassend,
- die Steuerungseinheit (C) und
- eine Steuerungsmodul-Datenschnittstelle mit
oder Steuerungs-Busdatenschnittstelle zum Anschluss der Busleitung (B) und
o einer Steuerungsmodul-Antriebsdatenschnittstelle zur signaltechnischen Kopplung mit der Antriebseinheit (D),
wobei die Steuerungseinheit (C) innerhalb des Steuerungsmoduls angeordnet, signaltechnisch mit der Steuerungsmodul-Busdatenschnittstelle und der Steuerungsmodul-Antriebsdatenschnittstelle verbunden ist und,
- die Steuerungsmodul-Busdatenschnittstelle als Steuerungs-Datenbusschnittstelle verwendet und über die Steuerungsmodul-Antriebsdatenschnittstelle das Steuerungssignal an die Antriebseinheit (D) sendet.

4. Verwendung nach Anspruch 3,
**dadurch gekennzeichnet,**
**dass**
- die Steuerungsmodul-Datenschnittstelle eine Sensordatenschnittstelle umfasst und
- das elektronische Adressierungsmodul (A) innerhalb des Steuerungsmoduls angeordnet und,
o das von dem Sensor erzeugte Sensorsignal über die Sensordatenschnittstelle empfängt und
o den Digitalsensorsignaldatenblock über die Steuerungsmodul-Busdatenschnittstelle in die Busleitung sendet.

5. Verwendung nach Anspruch 1,
**dadurch gekennzeichnet,**
**dass** die Steuerungseinheit (C) in dem Rollenkörper (R) angeordnet und eine Sensordatenschnittstelle zum Anschluss des Sensors (S) aufweist und das Sensorsignal über die Sensordatenschnittstelle empfängt.

6. Verwendung nach Anspruch 5,
**dadurch gekennzeichnet,**
**dass** das elektronische Adressierungsmodul (A) in dem Rollenkörper (R) angeordnet ist und die Sensordatenschnittstelle mit dem elektronischen Adressierungsmodul (A) verbunden ist,
wobei das elektronische Adressierungsmodul vorzugsweise über die Steuerungs-Datenbusschnittstelle den Bus-kodierten Sensordatenblock sendet.

7. Verwendung nach einem der vorhergehenden Ansprüche,
**dadurch gekennzeichnet,**
**dass** das elektronische Adressierungsmodul an dem Sensor (S) ausgebildet ist und eine Adressierungsmodul-Busdatenschnittstelle zum Anschluss der Busleitung (B) aufweist,
wobei das elektronische Adressierungsmodul (A) den Digitalsensorsignaldatenblock über die Adressierungsmodul-Busdatenschnittstelle in die Busleitung (B) sendet.

8. Verwendung nach einem der vorhergehenden Ansprüche,
**dadurch gekennzeichnet,**
**dass** der Sensor (S) eine dem Fördergut zugeordnete Identitätskodierung oder ein dem Fördergut zugeordnetes Förderziel erfasst und dass die Steuerungseinheit anhand des Sensorsignals,
das die dem Fördergut zugeordnete Identitätskodierung oder das dem Fördergut zugeordnete Förderziel beinhaltet, ein Steuerungssignal erzeugt und an einen Aktuator an einem Verzweigungs-, Kreuzungs- oder Zusammenführungsförderelement übermittelt, welches den Aktuator ansteuert und so eine Förderung in eine aus der Identitätskodierung oder dem Förderziel ableitbare, hierfür erforderliche oder bevorzugte Richtung bewirkt.

9. Verwendung nach Anspruch 5 oder 6,
**dadurch gekennzeichnet,**
**dass** die Steuerungseinheit (C) in dem Rollenkörper (R) angeordnet und ein Bus-kodiertes Sensorsignal über die Steuerungs-Datenbusschnittstelle empfängt.

10. Verwendung nach Anspruch 9,
**dadurch gekennzeichnet,**
**dass** die Steuerungseinheit eine Sensordatenschnittstelle und ein elektronisches Adressierungsmodul umfasst, welches signaltechnisch über die Sensordatenschnittstelle mit einem Sensor und mit der Busleitung gekoppelt ist und,
- ein über die Sensordatenschnittstelle in dem Adressierungsmodul empfangenes Sensorsignal zu einem Bus-kodierten Sensordatenblock kodiert, der einen digitalen, das Sensorsignal charakterisierenden Digitalsensorsignaldatenblock und einen Sensoradressdatenblock umfasst, und
- den Bus-kodierten Sensordatenblock in die Busleitung sendet.

11. Verwendung nach Anspruch 9 oder 10,
**dadurch gekennzeichnet,**
**dass** die Steuerungseinheit das Steuerungssignal in Abhängigkeit des Buskodierten Sensordatenblocks generiert.

12. Verwendung nach einem der vorhergehenden Ansprüche,
wobei mehrere Fördervorrichtungen in einer Fördervorrichtung verbaut sind.

## Claims

1. The use of a conveyor arrangement, the conveyor arrangement comprises
a) a motor-driven transport roller, comprising:
- a roller body (R) which is mounted in a rotatable manner about a roller axis,
- a drive unit (D) which is arranged inside the roller body, which is mechanically coupled between the roller body (R) and an axle element and generates a torque between the axle element and the roller body (AX),
- a control data interface which is connected to the drive unit (D) in a signalling manner,
b) a control unit (C), comprising a control databus interface, which is connected to a databus line (B), wherein the control unit (C) has a signalling connection to the drive unit (D) and receives bus-encoded data signals via the control databus interface, and which generates a control signal depending on the received data signals, and activates the drive unit (D) with a characteristic predetermined by the control signal in that the control signal is sent to the drive unit (D),
c) a sensor (S) which detects a conveying state, wherein the sensor (S) is arranged outside the roller body (R) and is designed to detect a conveyed material that is conveyed by the transport roller and to generate a sensor signal which signals the presence or the absence of a conveyed material in a sensor region that is monitored by the sensor,
**characterized by**
d) an electronic addressing module (A), which is coupled with the sensor (S) and with the bus line (B) in a signalling manner, and which
- encodes a sensor signal, which is generated by the sensor (S) and received in the addressing module (A), to form a bus-encoded sensor data block which comprises a digital sensor signal data block, which is digital and characterizes the sensor signal, and a sensor address data block, wherein the sensor address data block comprises information about the installation location of the sensor and a time stamp, so that the sensor signal is uniquely identifiable by origin and detection time, and
- sends the bus-encoded sensor data block to the bus line (B),
e) wherein the control unit (C) receives the bus-encoded sensor signal that is generated by the addressing module (A) and processes it in that it receives the signals received via the bus line from the control module bus data interface and processes them, and from that generates control signals for the drive unit (D) and sends them to the same.

2. The use according to Claim 1,
**characterized**
**in that** the electronic addressing module (A) is arranged outside the roller body (R) and has an addressing module data interface with an addressing module sensor data interface for connecting the sensor and an addressing module bus data interface for connecting the bus line,
wherein the electronic addressing module
- receives the sensor signal generated by the sensor via the sensor data interface, and
- sends the bus-encoded sensor data block to the bus line (B) via the addressing module bus data interface.

3. The use according to Claim 1 or 2,
**characterized by**
a control module arranged outside the roller body (R), comprising,
- the control unit (C) and
- a control module data interface having
o the control bus data interface for connecting the bus line (B) and
o a control module drive data interface for coupling with the drive unit (D) in a signalling manner,
wherein the control unit (C) is arranged inside the control module and connected in a signalling manner to the control module bus data interface and the control module drive data interface, and
- the control module bus data interface is used as control data bus interface and sends the control signal to the drive unit (D) via the control module drive data interface.

4. The use according to Claim 3,
**characterized**
**in that**
- the control module data interface comprises a sensor data interface, and
- the electronic addressing module (A) is arranged inside the control module, and
o receives the sensor signal generated by the sensor via the sensor data interface, and
o sends the digital sensor signal data block to the bus line via the control module bus data interface.

5. The use according to Claim 1,
**characterized**
**in that** the control unit (C) is arranged in the roller body (R) and has a sensor data interface for connecting the sensor (S) and receives the sensor signal via the sensor data interface.

6. The use according to Claim 5,
**characterized**
**in that** the electronic addressing module (A) is arranged in the roller body (R) and the sensor data interface is connected to the electronic addressing module (A),
wherein the electronic addressing module preferably sends the bus-encoded sensor data block via the control data bus interface.

7. The use according to any one of the preceding claims,
**characterized**
**in that** the electronic addressing module is constructed at the sensor (S) and has an addressing module bus data interface for connecting the bus line (B), wherein the electronic addressing module (A) sends the digital sensor signal data block to the bus line (B) via the addressing module bus data interface.

8. The use according to any one of the preceding claims,
**characterized**
**in that** the sensor (S) detects an identity coding assigned to the conveyed material or a conveying destination assigned to the conveyed material, and in that the control unit generates a control signal based on the sensor signal, which contains the identity coding assigned to the conveyed material or which contains the conveying destination assigned to the conveyed material, and transmits it to an actuator at a branching, crossing or merge conveying element which actuates the actuator and thus brings about conveying in a direction that can be derived from the identity coding or the conveying destination and is required or preferred for this.

9. The use according to Claim 5 or 6,
**characterized**
**in that** the control unit (C) is arranged in the roller body (R) and receives a bus-encoded sensor signal via the control data bus interface.

10. The use according to Claim 9,
**characterized**
**in that** the control unit comprises a sensor data interface and an electronic addressing module which is coupled in a signalling manner with a sensor and with the bus line via the sensor data interface, and
- encodes a sensor signal that is received via the sensor data interface in the addressing module to form a bus-encoded sensor data block which comprises a digital sensor signal data block, which is digital and characterizes the sensor signal, and a sensor address data block, and
- sends the bus-encoded sensor data block to the bus line.

11. The use according to Claim 9 or 10,
**characterized**
**in that** the control unit generates the control signal depending on the bus-encoded sensor data block.

12. The use according to any one of the preceding claims,
wherein a plurality of conveying devices are installed in a conveying device.

## Revendications

1. Utilisation d'un agencement de transport, l'agencement de transport comprend
a) un rouleau de transport motorisé, comprenant :
- un corps de rouleau (R) logé pouvant tourner autour d'un axe de rouleau,
- une unité d'entraînement (D) disposée à l'intérieur du corps de rouleau, qui est couplée mécaniquement entre le corps de rouleau (R) et un élément axial et produit un couple entre l'élément axial et le corps de rouleau (AX),
- une interface de données de commande reliée techniquement par signaux à l'unité d'entraînement (D),
b) une unité de commande (C), comprenant une interface de bus de données de commande, qui est reliée à une ligne de bus de données (B), sachant que l'unité de commande (C) est en liaison par signaux avec l'unité d'entraînement (D) et reçoit les signaux de données codés par le bus par le biais de l'interface de bus de données de commande et laquelle génère un signal de commande en fonction des signaux de données reçus et active l'unité d'entraînement (D) avec une caractéristique prédéterminée par le signal de commande, le signal de commande étant envoyé à l'unité d'entraînement (D),
c) un capteur (S), qui saisit un état de transport, sachant que le capteur (S) est disposé en dehors du corps de rouleau (R), pour saisir un produit à transporter transporté par le rouleau de transport et pour générer un signal de détection, lequel signale la présence ou l'absence d'un produit à transporter dans une zone de détection contrôlée par le capteur,
**caractérisé par**
d) un module d'adressage électronique (A), lequel est couplé techniquement par signaux avec le capteur (S) et avec la ligne de bus (B) et lequel
- code un signal de détection produit par le capteur (S) et reçu dans le module d'adressage (A) en un bloc de données de détection codé par le bus, qui comprend un bloc numérique de données de signal numériques caractérisant le signal de détection et un bloc de données d'adressage de détection, sachant que le bloc de données d'adressage de détection comprend des informations relatives au lieu de montage du capteur et un horodateur de telle manière que le signal de détection peut être clairement identifié selon l'origine et l'heure de saisie, et
- envoie le bloc de données de détection codé par le bus dans la ligne de bus (B),
e) sachant que l'unité de commande (C) reçoit et traite le signal de détection codé par le bus produit par le module d'adressage (A), par le fait qu'il reçoit et traite les signaux reçus par la ligne de bus à partir de l'interface de données de bus de module de commande et génère à partir de ceux-ci des signaux de commande pour l'unité d'entraînement (D) et les envoie à celle-ci.

2. Utilisation selon la revendication 1,
**caractérisée en ce que**
le module d'adressage électronique (A) est disposé en dehors du corps de rouleau (R) et comporte une interface de données de module d'adressage avec une interface de données de détection de module d'adressage pour le raccordement du capteur et une interface de données de bus de module d'adressage pour le raccordement de la ligne de bus,
sachant que le module d'adressage électronique,
- reçoit le signal de détection produit par le capteur par le biais de l'interface de données de détection et
- envoie le bloc de données de détection codé par le bus dans la ligne de bus (B) par le biais de l'interface de données de bus de module d'adressage.

3. Utilisation selon la revendication 1 ou 2,
**caractérisée par**
un module de commande disposé en dehors du corps de rouleau (R), comprenant
- l'unité de commande (C) et
- une interface de données de module de commande avec
o l'interface de données de bus de commande pour raccordement de la ligne de bus (B) et
o une interface de données d'entraînement de module de commande pour le couplage par la technique de signaux avec l'unité d'entraînement (D),
sachant que l'unité de commande (C) est disposée à l'intérieur du module de commande, est reliée par la technique de signaux à l'interface de données de bus de module de commande et à l'interface de données d'entraînement de module de commande et,
- utilise l'interface de données de bus de module de commande entant qu'interface de bus de données de commande et envoie le signal de commande à l'unité d'entraînement (D) par le biais de l'interface de données d'entraînement de module de commande.

4. Utilisation selon la revendication 3,
**caractérisée en ce que**
- l'interface de données de module de commande comprend une interface de données de détection et
- le module d'adressage électronique (A) est disposé à l'intérieur du module de commande et ,
o reçoit le signal de détection produit par le capteur par le biais de l'interface de données de détection et
o envoie le bloc de données de signalisation de détection numérique par le biais de l'interface de données de bus de module de commande dans la ligne de bus.

5. Utilisation selon la revendication 1,
**caractérisée en ce que**
l'unité de commande (C) est disposée dans le corps de rouleau (R) et comporte une interface de données de détection pour raccordement du capteur (S) et reçoit le signal de détection par le biais de l'interface de données de détection.

6. Utilisation selon la revendication 5,
**caractérisée en ce que**
le module d'adressage électronique (A) est disposé dans le corps de rouleau (R) et l'interface de données de détection est reliée au module d'adressage électronique (A),
sachant que le module d'adressage électronique envoie le bloc de données de détection codé par le bus de préférence par le biais de l'interface de bus de données de commande.

7. Utilisation selon l'une quelconque des revendications précédentes,
**caractérisée en ce que**
le module d'adressage électronique est constitué sur le capteur (S) et comporte une interface de données de bus de module d'adressage pour raccordement à la ligne de bus (B),
sachant que le module d'adressage électronique (A) envoie le bloc de données de signal de détection numérique dans la ligne de bus (B) par le biais de l'interface de données de bus de module d'adressage.

8. Utilisation selon l'une quelconque des revendications précédentes,
**caractérisée en ce que**
le capteur (S) saisit une codification d'identité attribuée au produit à transporter ou un objectif de transport attribué au produit à transporter et **en ce que** l'unité de commande produit un signal de commande à l'aide du signal de détection,
qui contient la codification d'identité attribuée au produit à transporter ou l'objectif de transport attribué au produit à transporter et transmet à un actionneur sur un élément de ramification, de croisement ou de jonction, lequel active l'actionneur et déclenche ainsi un transport dans une direction déductible de la codification d'identité ou de l'objectif de transport, nécessaire ou préférée à cet effet.

9. Utilisation selon la revendication 5 ou 6,
**caractérisée en ce que**
l'unité de commande (C) est disposée dans le corps de rouleau (R) et reçoit un signal de détection codé par le bus par le biais de l'interface de bus de données de commande.

10. Utilisation selon la revendication 9,
**caractérisée en ce que**
l'unité de commande comprend une interface de données de détection et un module d'adressage électronique, lequel est couplé par la technique de signaux par le biais de l'interface de données de détection à un capteur et à la ligne de bus et
- code un signal de détection reçu dans le module d'adressage par le biais de l'interface de données de détection en un bloc de données de détection codé par le bus, qui comprend un bloc numérique de données de signalisation de détection numérique caractérisant le signal de détection et un bloc de données d'adressage de détection, et
- envoie le bloc de données de détection codé par le bus dans la ligne de bus.

11. Utilisation selon la revendication 9 ou 10,
**caractérisée en ce que**
l'unité de commande génère le signal de commande en fonction du bloc de données de détection codé par le bus.

12. Utilisation selon l'une quelconque des revendications précédentes,
sachant que plusieurs dispositifs de transport sont mis en place dans un dispositif de transport.
